# EUROPEAN PATENT SPECIFICATION

(11) **EP 2 938 116 B1**
(45) Date of publication and mention of the grant of the patent: **16.05.2018**
(21) Application number: 13865916.4
(22) Date of filing: 29.10.2013
(51) Int. Cl.: H04W 28/16, H04W 84/04, H04W 72/12

(54) **METHOD AND SYSTEM FOR PROCESSING CONFIGURATION INFORMATION**
VERFAHREN UND SYSTEM ZUR VERARBEITUNG VON KONFIGURATIONSINFORMATIONEN
PROCÉDÉ ET SYSTÈME POUR LE TRAITEMENT DE DONNÉES DE CONFIGURATION

(30) Priority: 19.12.2012 CN 201210594114
(43) Date of publication of application: 28.10.2015
(73) Proprietor: ZTE Corporation, Shenzhen, Guangdong 518057 (CN)
(72) Inventor: DAN, Hanping, Shenzhen Guangdong 518057 (CN); XUE, Yuhong, Shenzhen Guangdong 518057 (CN); CHEN, Hui, Shenzhen Guangdong 518057 (CN); MA, Zijiang, Shenzhen Guangdong 518057 (CN)
(74) Representative: Novagraaf Technologies
(86) International application number: PCT/CN2013/086172
(87) International publication number: WO 2014/094504

(56) References cited:
- WO-A1-2012/053574
- WO-A1-2012/108154
- WO-A1-2012/150894
- CN-A- 101 772 222
- CN-A- 102 340 344
- NTT DOCOMO ET AL: "MBSFN subframe and ABS coordination for eICIC", 3GPP DRAFT; R3-103444, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jacksonville, USA; 20101115, 9 November 2010 (2010-11-09), XP050496755, [retrieved on 2010-11-09]
- SAMSUNG: "eICIC measurement for MBSFN configuration", 3GPP DRAFT; R4-114526, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Athens, Greece; 20110822, 16 August 2011 (2011-08-16), XP050543150, [retrieved on 2011-08-16]
- CATT: "Considerations on Time Domain Solution in Macro-Pico", 3GPP DRAFT; R1-105183, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450401, [retrieved on 2010-10-05]

## Description

### Technical field

The present invention relates to the communications field, and in particular to a method and system for processing configuration information.

### Background

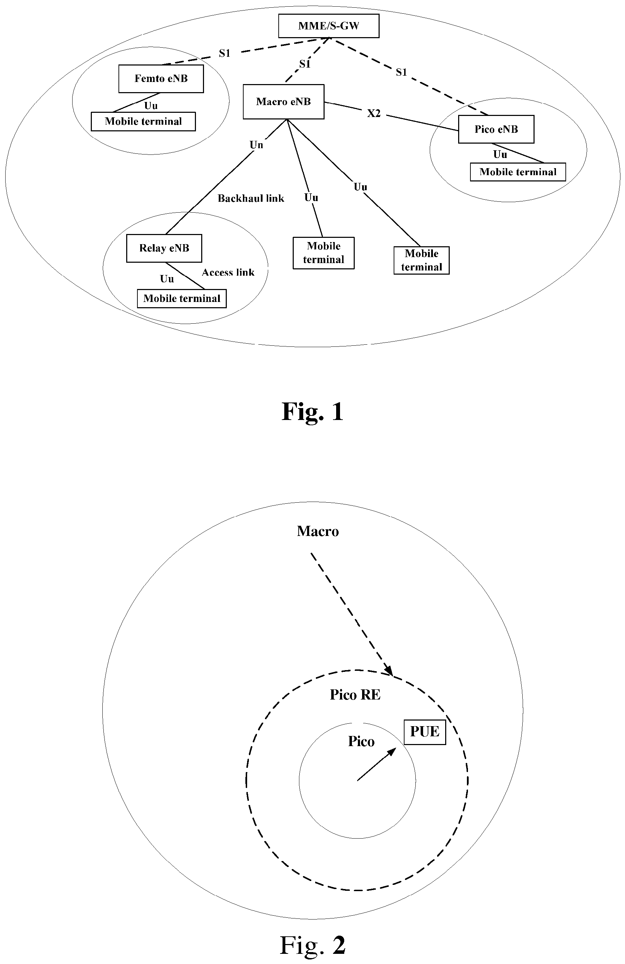

A heterogeneous network (HetNet) refers to the introduction of some transmission nodes with smaller transmission power relative to traditional cell base stations into a traditional cellular network, i.e. Low Power Nodes (LPN). Fig. 1 is a schematic diagram of an HetNet network according to the related art. As shown in Fig. 1, the HetNet network may include: at least one Pico cell, at least one Femto cell, and at least one Relay for signal relay, and the above-mentioned LPN per se is also a base station and can be represented by an eNodeB (eNB) or a NodeB.

In the 3rd Generation Partnership Project (3GPP), a inter-cell interference coordination (ICIC) is used for controlling and coordinating interferences between different cells. A ICIC mechanism is essentially a multi-cell radio resource management (RRM) function, and a multi-cell RRM needs to consider a radio resource use status and service load situation of multiple cells. In the 3GPP, the ICIC mechanism may include a frequency domain method and a time domain method, and the ICIC mechanism can be different as regards an up link and a down link, which mainly focuses on a macro-pico scenario and a macro-femto scenario. Fig. 2 is a schematic diagram of a macro-pico scenario according to the related art. As shown in Fig. 2, the present invention mainly aims at a downlink ICIC mechanism which adopts a time domain method and a macro-pico scenario. Interference coordination schemes of the heterogeneous network can mainly be divided into a time domain mode ICIC (e.g., configuring an almost blank subframe (ABS) subframe or configuring an multimedia broadcast multicast service single frequency network (MBSFN) subframe), a frequency domain mode ICIC, a power control and a space domain processing, wherein,

### (1) configuring the ABS

An aggressor cell sends or does not send a signal when the ABS subframe reduces the power, so as to avoid interferences to a victim cell. The ABS subframe adopts a limited transmission power or even does not transmit (a transmission power being zero), that is, the eNB transmits adopting the limited transmission power or does not transmit on the ABS subframe, and at the same time, the eNB ensures the backward compatibility, for example, the eNB only transmits necessary control channels and system messages, etc., on the ABS subframe.

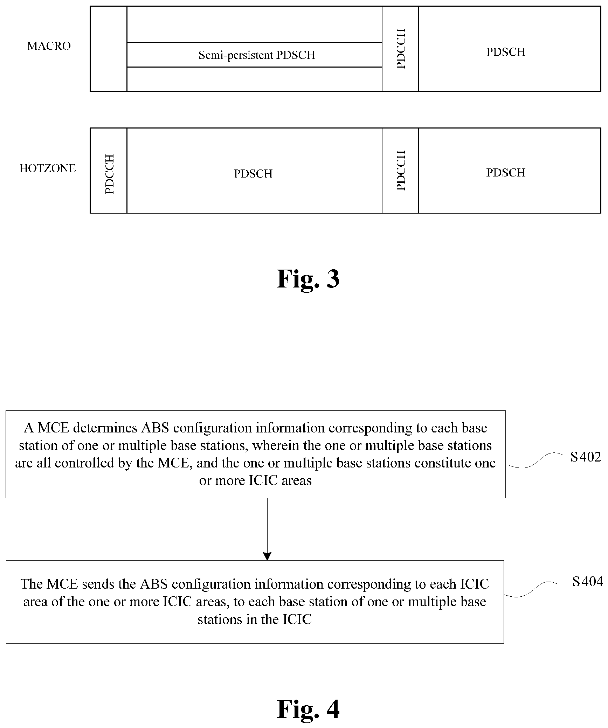

Fig. 3 is a schematic diagram showing the comparison between an ABS subframe and a common subframe according to the related art. As shown in Fig. 3, on the ABS subframe, a base station of the aggressor cell does not schedule a UE to receive downlink data on the ABS subframe other than semi-persistent scheduling (SPS), so as to avoid interferences to the victim cell.

In order to solve the problem that frequency domain-divided interference avoidance mode cannot be performed according to areas during HetNet networking, a method of avoiding interferences in a time domain mode is introduced which means that when a macro base station normally transmits, a micro base station interference area does not work; whereas when the macro base station does not transmit data, the micro base station interference area works normally, that is, in the ABS subframe, the micro base station works normally while the macro base station does not transmit data.

### (2) configuring the MBSFN subframe

The MBSFN subframe, which is also called a multicast subframe relative to a unicast subframe, means that first several symbols of a subframe transfer a common reference signal (CRS) and control signalling, and last several symbols do not transfer any signal (including: the CRS and the data). The difference from the above-mentioned ABS subframe lies in for which subframes, ABS subframes can be configured to have no limitation, but there exist limitations for MBSFN subframes: a subframe 0/4/5/9 in an FDD case (or 0/1/2/5/6 in a TDD case) cannot be used as an MBSFN subframe.

A ABS configuration needs to be interacted between the base station of the aggressor cell and the base station of the victim cell. Since there is no backhaul between a macro and a femto, the ABS configuration is implemented by an Operation Administration Maintenance (OAM) in this scenario. Moreover, ABS status information and ABS configuration information are interacted between the macro and the femto by means of X2 signalling Load Indication. The ABS status information means information related to the load of the micro base station which is sent to the macro base station by the micro base station when it is used for a ICIC function, for example, the number of activated users, a radio resource utilization rate, a data throughput, interference-related information, information about users located in a CRE expanded area, etc. In an X2 signalling flow resource status reporting of a 3GPP protocol, the macro base station requires the Pico base station to report the utilization of a ABS in real time through a RESOURCE STATUS REQUEST message. The Pico base station reports the utilization of the ABS in real time through a RESOURCE STATUS UPDATE message, which may include an RB ratio used on the actually used ABS subframe and information about the actually used ABS subframe (which is a subset of the ABS subframe configuration). Therefore, according to the 3GPP protocol, the micro base station sends the ABS status information to the macro base station through a message or procedure of a X2 interface, wherein the ABS status information is used for reporting the utilization of the ABS subframe of the micro base station per se. The ABS status information may include but is not limited to at least one item of the following information: an ABS Status, the RB ratio used on the actually used ABS subframe and the information about the actually used ABS subframe (which is the subset of the ABS subframe configuration). The ABS configuration information mainly includes: the ABS configuration information sent by the macro base station to the micro base station when it is used for the ICIC function. According to the 3GPP protocol, the ABS configuration information is sent to the micro base station by the macro base station through the message or procedure of the X2 interface, for example, LOAD INFORMATION; and the ABS configuration information may include but is not limited to at least one item of the following information: ABS subframe configuration, antenna port information, and measurement restriction subframe configuration for co-frequency measurement (which is a subset of the ABS subframe configuration). Since an interfered RIO UE will only be scheduled on the ABS, the RIO UE can be limited to measure an RLM/RRM/CSI subframe (i.e. a subset of the ABS). Although the Pico cell covers a small range, it is generally considered that a PeNB signal received by a UE at a cell center of the Pico cell is good, and therefore there is no need to consider the ICIC. Description is provided below using an example. A load information message of the X2 interface which is sent by the macro base station to the micro base station may include an information element (IE), wherein the information element may further include: ABS information, and the information element may further include: IE ABS pattern info, wherein the ABS pattern info can indicate an ABS for the ICIC function which is sent by the macro base station to the micro base station.

The following problem exists in the related art: in the actual network deployment, different eNBs may belong to different device manufacturers, and an X2 interface between two eNBs can not be able to be open. In other words, the two eNBs can be unable to interact information with each other by means of the message or procedure of the X2 interface, that is, in different eNBs, one is a macro base station for controlling macro cells, while the other is a micro base station for controlling pico cells, and the two base station belong to different device providers and cannot transfer the ABS status information and the ABS configuration information with each other, rendering the ICIC function unable to be achieved. WO 2012053574A1, NTT DOCOMO ET AL: "MBSFN subframe and ABS coordination for eICIC", WO 2012/150894A1, CN 101772222A1 and CN 102340344A1 provide related technical solutions; however, the above mentioned problem still remains unsolved.

### Summary

The embodiments of the present invention provide a method and system for processing configuration information, according to the accompanying claims, so as to at least solve the problem in the related art that ABS status information and ABS configuration information being transmitted among various base stations is achieved only using messages and procedures of an X2 interface between the two of the various base stations increases the difficulty of actual deployment of the base stations.

A method for processing configuration information is provided according to one aspect of the present invention.

The method for processing configuration information according to the present invention includes: determining, by a multi-cell/multi-media cooperation entity (MCE), almost blank subframe (ABS) configuration information corresponding to each base station of one or multiple base stations, wherein the one or multiple base stations are all controlled by the MCE, and the one or multiple base stations constitute one or more inter-cell interference coordination (ICIC) areas; and sending, by the MCE, the ABS configuration information corresponding to each ICIC area of the one or more ICIC areas, to each base station of one or multiple base stations in the ICIC.

In an example embodiment, the multiple base stations in each ICIC area of the one or more ICIC areas includes: one macro base station and one or more pico base stations, or one base station of an aggressor cell and one or multiple base stations of a victim cell.

In an example embodiment, determining, by the MCE, the ABS configuration information corresponding to each base station of the one or multiple base stations includes: allocating, by the MCE for each ICIC area in the one or more ICIC areas, multimedia broadcast multicast service single frequency network (MBSFN) area identifier (ID) information corresponding to the ICIC area, wherein after reading the MBSFN area ID information, one or multiple base stations in the ICIC area determine that an area corresponding to the MBSFN area ID information is an ICIC area; and the MBSFN area ID information is used for indicating that an MBSFN subframe acquired from the MCE by the one or multiple base stations in the ICIC area corresponding to the MBSFN area ID information is an ABS subframe for ICIC; or, allocating, by the MCE through configuring a multimedia broadcast multicast service, MBMS, scheduling information message for each base station of one or multiple base stations in each ICIC area of the one or more ICIC areas to each ICIC area of the one or more ICIC areas the ABS configuration information corresponding to the ICIC area, wherein the MBMS scheduling information message carries MBSFN area ID information and MBSFN subframe configuration information corresponding to the ICIC area, and an information element corresponding to physical multicast channel (PMCH) configuration information is configured to be empty; and after reading the MBSFN area ID information, the one or multiple base stations in the ICIC area determine that an area corresponding to the MBSFN area ID information is an ICIC area and determine, according to the MBSFN subframe configuration information, that an MBSFN subframe acquired from the MCE is an ABS subframe for ICIC; or, configuring, by the MCE, through a message and a procedure of an M2 interface, configuration information of one or more MBSFN areas for the one or multiple base stations under the control of the MCE wherein the configuration information of at least one MBSFN area of the one or more MBSFN areas carries MBSFN area ID information corresponding to an ICIC area to which the base station belongs and corresponding MBSFN subframe configuration information; meanwhile, an MBMS gateway only sends data for bearing an MBMS service to one or multiple base stations under the control of the MCE via an M1 interface, and one or multiple base stations in each MBSFN area of the one or more MBSFN areas determine, according to MBMS data content of an area corresponding to the MBSFN area ID information having been configured to empty, that the area corresponding to the MBSFN area ID information is an ICIC area and determine that an MBSFN subframe of the ICIC area is an ABS subframe for ICIC.

In an example embodiment, after sending, by the MCE, the ABS configuration information corresponding to each ICIC area to each base station of one or multiple base stations in each ICIC area of the one or more ICIC areas, the method further includes: a macro base station or a base station of an aggressor cell configuring a data field on the MBSFN subframe acquired from the MCE to be in an idle status; and a pico base station or a base station of a victim cell sending data in the data field on the MBSFN subframe acquired from the MCE.

In an example embodiment, determining, by the MCE, ABS configuration information corresponding to each base station of the one or multiple base stations includes: acquiring, by the MCE, the ABS status information corresponding to each base station of the one or multiple base stations, wherein the ABS status information corresponding to each base station carries ABS configuration information currently used by the base station and/or ABS configuration information to be acquired; and calculating, by the MCE, the ABS configuration information corresponding to each base station of the one or multiple base stations according to the acquired ABS status information corresponding to each base station of the one or multiple base stations.

In an example embodiment, before acquiring, by the MCE, the ABS status information corresponding to each base station of the one or multiple base stations, the method further includes: reporting, by each base station of the one or multiple base stations, the ABS status information corresponding to the base station to the MCE.

In an example embodiment, each base station of the one or multiple base stations reports the ABS status information corresponding to the base station to the MCE by one of the following manners: an operation and maintenance station, a network management system configuration interface, and a message or a procedure of the M2 interface.

In an example embodiment, the MCE sends, to each base station of the one or multiple base stations, the ABS configuration information corresponding to the base station by one of the following manners: an operation and maintenance station, a network management system configuration interface, and a message or a procedure of the M2 interface.

A system for processing configuration information is provided according to another aspect of the present invention.

The system for processing configuration information according to the present invention includes: an MCE; the MCE including: a determination component configured to determine ABS configuration information corresponding to each base station of one or multiple base stations, wherein the one or multiple base stations are all controlled by the MCE, and the one or multiple base stations constitute one or more ICIC areas; and an sending component configured to send the ABS configuration information, corresponding to each ICIC area of the one or more ICIC areas, to each base station of one or multiple base stations in the ICIC area.

In an example embodiment, more base stations in each ICIC area of the one or more ICIC areas includes: one macro base station and one or more pico base stations, or one base station of the aggressor cell and one or multiple base stations of one or more victim cells.

In an example embodiment, the determination component configured to allocate, for each ICIC area in the one or more ICIC areas, multimedia broadcast multicast service single frequency network (MBSFN) area identifier (ID) information corresponding to the ICIC area, wherein, after reading the MBSFN area ID information, one or multiple base stations in the ICIC area determine that an area corresponding to the MBSFN area ID information is an ICIC area; and the MBSFN area ID information is used for indicating that an MBSFN subframe acquired from the MCE by one or multiple base stations in the ICIC area corresponding to the MBSFN area ID information is an ABS subframe for ICIC; or, the determination component configured to allocate, through configuring a multimedia broadcast multicast service, MBMS, scheduling information message for each base station of one or multiple base stations in each ICIC area of the one or more ICIC areas with a multimedia broadcast multicast service (MBMS) scheduling information message, to each ICIC area of the one or more ICIC areas the ABS configuration information corresponding to the ICIC area, wherein the MBMS scheduling information message carries MBSFN area ID information and MBSFN subframe configuration information corresponding to the ICIC area, and an information element corresponding to physical multicast channel (PMCH) configuration information is configured to be empty; and after reading the MBSFN area ID information, the one or multiple base stations in the ICIC area determine that an area corresponding to the MBSFN area ID information is an ICIC area and determine that an MBSFN subframe acquired from the MCE is an ABS subframe for the ICIC according to the MBSFN subframe configuration information; or, the determination component configured to configure through a message and a procedure of an M2 interface, configuration information of one or more MBSFN areas for the one or multiple base stations under the control of the MCE with configuration information of one or more MBSFN areas, through a message and a procedure of an M2 interface, wherein the configuration information of at least one MBSFN area of the one or more MBSFN areas carries MBSFN area ID information corresponding to an ICIC area to which the base station belongs and corresponding MBSFN subframe configuration information; meanwhile, an MBMS gateway only sends data for bearing an MBMS service to one or multiple base stations under the control of the MCE via an M1 interface, and one or multiple base stations in each MBSFN area of the one or more MBSFN areas determine that an area corresponding to the MBSFN area ID information is an ICIC area and determine that an MBMS subframe of the ICIC area is an ABS subframe for ICIC according to MBMS data content of the area corresponding to the MBSFN area ID information having been empty.

In an example embodiment, the above-mentioned system further includes: one macro base station and one or more micro base stations, or one base station of an aggressor cell or one or multiple base stations of a victim cell; the macro base station or a base station of an aggressor cell including: a setting component configured to configure a data field on the MBSFN subframe acquired from the MCE to be in an idle status; and the micro base station or the base station of the victim cell comprising: a sending component configured to send data in the data field on the MBSFN subframe acquired from the MCE.

In an example embodiment, the determination component includes: an acquisition element configured to acquire the ABS status information corresponding to each base station of the one or multiple base stations, wherein the ABS status information corresponding to each base station carries ABS configuration information currently used by the base station and/or ABS configuration information to be acquired; and a calculation element configured to calculate the ABS configuration information corresponding to each base station of the one or multiple base stations according to the acquired ABS status information corresponding to each base station of the one or multiple base stations.

In an example embodiment, each base station of the one or multiple base stations under the control of the MCE includes: a report component configured to report the ABS status information corresponding to the base station to the MCE.

In an example embodiment, the report component is configured to report the ABS status information corresponding to the base station to the MCE by one of the following manners: an operation and maintenance station, a network management system configuration interface, and a message or a procedure of the M2 interface.

In an example embodiment, the sending component is configured to send, to each base station of the one or multiple base stations, the ABS configuration information corresponding to the base station by one of the following manners: an operation and maintenance station, a network management system configuration interface, and a message or a procedure of the M2 interface.

In the embodiments of the present invention, the ABS configuration information corresponding to each base station of one or multiple base stations under the control of the MCE is determined by the MCE, wherein the above-mentioned one or multiple base stations constitute one or more ICIC areas; and the MCE sends the ABS configuration information corresponding to each ICIC area of the one or more ICIC areas to each base station of one or multiple base stations in the ICIC area, the problem in the related art that the ABS status information and the ABS configuration information being transmitted among various base stations is achieved only using messages and procedures of an X2 interface between the two of the various base stations increases the difficulty of actual deployment of the base stations is solved, and thus it is achieved that, when more base stations all belong to the same MBSFN area (i.e. the ICIC areas under the control of the same MCE), the transfer of the ABS status information and the ABS configuration information is completed between the MCE and one of various base stations under the control of the MCE, thereby achieving the ICIC function.

### Brief description of the drawings

Drawings, provided for further understanding of the present invention and forming a part of the specification, are used to explain the present invention together with embodiments of the present invention rather than to limit the present invention, wherein:
Fig. 1 is a schematic diagram of an HetNet network according to the related art;
Fig. 2 is a schematic diagram of a macro-pico scenario according to the related art;
Fig. 3 is a schematic diagram showing the comparison between an ABS subframe and a common subframe according to the related art;
Fig. 4 is a flowchart of a method for processing configuration information according to an embodiment of the present invention;
Fig. 5 is a schematic diagram of an MBMS scheduling information procedure according to an example embodiment of the present invention;
Fig. 6 is a schematic diagram of an E-MBMS logical architecture according to an example embodiment of the present invention;
Fig. 7 is a schematic diagram of configuring ICIC areas according to an example embodiment of the present invention;
Fig. 8 is a schematic diagram of configuring an ABS by a network management configuration interface according to an example embodiment of the present invention;
Fig. 9 is a structural block diagram of a system for processing configuration information according to an embodiment of the present invention; and
Fig. 10 is a structural block diagram of a system for processing configuration information according to an example embodiment of the present invention.

### Detailed description of the embodiments

The present invention is described below with reference to the accompanying drawings and embodiments in detail. Note that, the embodiments of the present invention and the features of the embodiments may be combined with each other if there is no conflict.

Fig. 4 is a flowchart of a method for processing configuration information according to an embodiment of the present invention. As shown in Fig. 4, the method may include the following processing steps:
step S402: a multi-cell/multi-media cooperation entity (MCE) determines almost blank subframe (ABS) configuration information corresponding to each base station of one or multiple base stations, wherein the one or multiple base stations are all controlled by the MCE, and the one or multiple base stations constitute one or more inter-cell interference coordination (ICIC) areas; and
step S404: the MCE sends the ABS configuration information corresponding to each ICIC area of the one or more ICIC areas, to each base station of one or multiple base stations in the ICIC.

In the related art, the ABS status information and the ABS configuration information being transmitted among various base stations is achieved only using messages and procedures of an X2 interface between the two of the various base stations, and since configuring messages of the ABS status information and/or the ABS configuration information on the X2 interface needs eNBs of different device providers all support the messages and procedures of an 3GPP X2 interface, thereby increasing the difficulty of actual deployment of the base stations. By using the method as shown in Fig. 4, a multi-cell/multi-media cooperation entity (MCE) determines the ABS configuration information corresponding to each base station of one or multiple base stations under the control of the MCE, wherein the above-mentioned one or multiple base stations constitute one or more ICIC areas; and the MCE sends the ABS configuration information corresponding to each ICIC area to each base station of one or multiple base stations in each ICIC area of the one or more ICIC areas, the problem in the related art that the ABS status information and the ABS configuration information being transmitted among various base stations is achieved only using messages and procedures of an X2 interface between the two of the various base stations increases the difficulty of actual deployment of the base stations is solved, and thus it is achieved that, when more base stations all belong to the same MBSFN area (in the present invention, the MBSFN area bears no MBMS service, i.e. the ICIC areas under the control of the same MCE), the transfer of the ABS status information and the ABS configuration information is completed between the MCE and one of various base stations under the control of the MCE, thereby achieving the ICIC function.

In an example embodiment, the MCE can send the ABS configuration information to one or more eNBs. If the ABS configuration information is sent to more eNBs and these eNBs belong to the same ICIC area, then the ABS configuration information configured for these eNBs with regard to the ICIC area is the same. The ABS configuration mainly refers to MBSFN subframe configuration in one or more ICIC areas by means of messages or procedures on an M2 interface, which can be further configured by means of an information element "MBSFN Subframe Configuration" on the message born on the M2 interface.

In an example implementation process, the multiple base stations in each ICIC area of the above-mentioned one or more ICIC areas includes: one macro base station and one or more pico base stations, or one base station of the aggressor cell and one or multiple base stations of one or more victim cells.

In an example embodiment, in step S402, the way in which the MCE determines the ABS configuration information corresponding to each base station of the one or multiple base stations may include but is not limited to one of the following:
way one, the MCE allocates, for each ICIC area in the one or more ICIC areas, multimedia broadcast multicast service single frequency network (MBSFN) area identifier (ID) information corresponding to the ICIC area, wherein after reading the MBSFN area ID information, one or multiple base stations in the ICIC area determine that an area corresponding to the MBSFN area ID information is an ICIC area; and the MBSFN area ID information is used for indicating that an MBSFN subframe acquired from the MCE by the one or multiple base stations in the ICIC area corresponding to the MBSFN area ID information is an ABS subframe for ICIC;
way two, the MCE allocates, through configuring a multimedia broadcast multicast service, MBMS, scheduling information message for each base station of one or multiple base stations in each ICIC area of the one or more ICIC areas, to each ICIC area of the one or more ICIC areas the ABS configuration information corresponding to the ICIC area, wherein the MBMS scheduling information message carries MBSFN area ID information and MBSFN subframe configuration information (the MBSFN subframe configuration information refers to which radio subframes are MBSFN subframes, that is, an allocation pattern of the MBSFN subframes) corresponding to the ICIC area, and an information element corresponding to physical multicast channel (PMCH) configuration information is configured to be empty; and after reading the MBSFN area ID information, the one or multiple base stations in the ICIC area determine that an area corresponding to the MBSFN area ID information is an ICIC area and determine, according to the MBSFN subframe configuration information, that an MBSFN subframe acquired from the MCE is an ABS subframe for ICIC; and
way three, the MCE configures through a message and a procedure of an M2 interface, configuration information of one or more MBSFN areas for the one or multiple base stations under the control of the MCE, wherein the configuration information of at least one MBSFN area of the one or more MBSFN areas carries MBSFN area ID information corresponding to an ICIC area to which the base station belongs, meanwhile, an MBMS gateway only sends data for bearing an MBMS service to one or multiple base stations under the control of the MCE via an M1 interface; and after one or multiple base stations in each MBSFN area of the one or more MBSFN areas read the MBSFN area ID information, if an MBSFN area corresponding to the MBSFN area ID information does not send corresponding MBMS data content on an M1 interface, then it is determined that the area corresponding to the MBSFN area ID information is an ICIC area and determined that an MBMS subframe of the ICIC area is an ABS subframe for ICIC.

In an example embodiment, in step S404, after the MCE sends the ABS configuration information corresponding to each ICIC area to each base station of one or multiple base stations in each ICIC area of the one or more ICIC areas, the method may further include the following operations:
operation one, a macro base station or a base station of an aggressor cell configures a data field on the MBSFN subframe acquired from the MCE to be in an idle status (in the present invention, the so-called idle status means that the base station does not send information in a data field of the MBSFN subframe); and
operation two, the pico base station or a base station of a victim cell sends data in the data field on the MBSFN subframe acquired from the MCE.

In an example embodiment, in step S402, the MCE determines the ABS configuration information corresponding to each base station of the one or multiple base stations may include the following operations:
step S1: the MCE acquires ABS status information corresponding to each base station of the one or multiple base stations, wherein the ABS status information corresponding to each base station carries ABS configuration information currently used by the base station and/or ABS configuration information to be acquired; and
step S2: the MCE calculates the ABS configuration information corresponding to each base station of the one or multiple base stations according to the acquired ABS status information corresponding to each base station of the one or multiple base stations.

In an example embodiment, in order to improve the accuracy of the MCE sending the ABS configuration information to the above-mentioned one or multiple base stations, before the MCE sends the ABS configuration information to the above-mentioned one or multiple base stations, the MCE should first obtain the ABS status information about the above-mentioned one or multiple base stations, then calculate the ABS configuration information according to the ABS status information reported by the base stations, and send the ABS status information to the one or multiple base stations by means of messages or procedures of the M2 interface.

In an example embodiment, in step S1, before the MCE acquires ABS status information corresponding to each base station of the one or multiple base stations, the method may further include the following processing: each base station of the one or multiple base stations reports the ABS status information corresponding to the base station to the MCE.

In an example implementation process, each base station of the above-mentioned one or multiple base stations can report the ABS status information corresponding to the base station to the MCE by, but is not limited to, one of the following manners: an operation and maintenance station, a network management system configuration interface, and a message or a procedure of the M2 interface.

In an example embodiment, the MCE can obtain the ABS status information of one or more eNBs under the control thereof by one of the following manners:
way one, the MCE can obtain the ABS status information of one or more eNBs under the control thereof by means of the operation and maintenance station;
way two, the MCE can obtain the ABS status information of one or more eNBs under the control thereof by means of a network management system configuration interface;
way three, the MCE can obtain the ABS status information of one or more eNBs under the control thereof by means of the preset interface between the eNBs and the MCE; and
way four, the MCE can obtain the ABS status information of one or more eNBs under the control thereof by means of messages or procedures of the M2 interface.

In an example embodiment, a micro base station (one kind of small-scale base station) can acquire information required for macro-micro (i.e. the macro base station and the micro base station) cooperation according to a load thereof and the ABS configuration information currently configured for the micro base station; and then the micro base station sends the ABS status information carrying the number of ABSs to the MCE via the messages or procedures of the M2 interface. The micro base station can also send the micro base station sends the ABS status information carrying the number of ABSs by means of the operation and maintenance station or the network management system configuration interface; and the micro base station can also send the ABS status information carrying the ABS number to the MCE via the preset interface between the eNBs and the MCE. The messages or procedures through which the eNB reports the ABS status information to the MCE can be initiated actively by the eNB, and can also be initiated in response to a request of the MCE, wherein the ABS status information may include: ABS configuration information which is being currently used, and can also include: ABS configuration information needed according to the current traffic.

In an example implementation process, the above-mentioned MCE can send, to each base station of the one or multiple base stations, the ABS configuration information corresponding to the base station by, but is not limited to, one of the following manners: the operation and maintenance station, the network management system configuration interface, and the message or the procedure of the M2 interface.

In an example embodiment, the MCE can send the ABS configuration information for one or more eNBs under the control of the MCE by one of the following manners:
way one, the MCE can send the ABS configuration information for one or more eNBs under the control of the MCE by means of the operation and maintenance station;
way two, the MCE can send the ABS configuration information for one or more eNBs under the control of the MCE by means of the network management system configuration interface;
way three, the MCE can send the ABS configuration information for one or more eNBs under the control of the MCE by means of the preset interface between the eNBs and the MCE; and
way four, the MCE can send the ABS configuration information for one or more eNBs under the control of the MCE by means of the messages or procedures of the M2 interface.

The above-mentioned example implementation process is further described below in combination with example embodiment one and example embodiment two of the present invention.

### Example embodiment one

A method for an MCE to transmit ABS information for one or more eNBs under the control of the MCE:
In technical solutions provided in the present invention, a existing MBSFN area ID in a 3GPP protocol is reused, wherein the MBSFN area ID actually is not an area identifier of a particular MBMS service, but is used as an ICIC area, the ICIC area referring to an area constituted by several eNBs needing inter-cell interference coordination. Thus, each eNB belonging to this ICIC area, i.e. having the MBSFN area ID in common, receives MBSFN subframe configuration information from the MCE, and these MBSFN areas can be used for ABS subframes. The MBSFN area ID corresponding to these ICIC areas can be pre-appointed, so that the MCE and the above-mentioned eNBs can learn that the MBSFN subframes corresponding to a identifier information are the ABS subframes after reading the identifier information.

It should be noted that the ABS subframe can be used for an ICIC function, and a MBSFN subframe can be used for a time-domain ICIC function (the MBSFN subframe also has a plurality of other uses, for example, conducting an MBMS service, positioning, etc.); therefore, in the present invention, in order to facilitate description, because the ABS subframe is used for the ICIC function, when the MBSFN subframe is used for the ICIC function, the MBSFN subframe may also be called being configured to be the ABS subframe.

In an example embodiment, an ICIC area is defined. The ICIC area may include: more base stations, wherein one base station is a macro base station, and the other base stations are micro base stations, and these base stations are all controlled by the same MCE. In an MBSFN area (i.e. the ICIC area), the MCE configures all the eNBs (including: the macro base station and the micro base stations, and generally one macro base station and several micro base stations) controlled by the MCE with the same ABS configuration information. The above-mentioned configuring the same ABS configuration information means that the MCE configures the eNBs under the control of the MCE with the MBSFN subframes for the ICIC by means of messages or procedures on the M2 interface. Meanwhile, the MCE configures all the eNBs in the MBSFN area not only with MBSFN subframes for the MBMS service, but also with MBSFN subframes for the ICIC, and the MBSFN subframes for the MBMS service and the MBSFN subframes for the ICIC are separated in the time domain and respectively belong to different MBSFN area IDs.

Before the MCE configures the above-mentioned eNBs with the MBSFN subframes for the ICIC, it can also first acquire, from an access gateway (AG), the number of ABS subframes that the micro base station needs to be configured with. The method for the MCE to acquire the required number of ABS subframes may adopt that of acquiring the ABS status information comprising the number of ABS subframes introduced in the above-mentioned example embodiment one. The messages or procedures through which the eNB reports the ABS status information can be initiated actively by the eNB, and can also be initiated in response to a request of the MCE, wherein the ABS status information may include: ABS configuration information which is being currently used, and can also include: ABS configuration information needed according to the current traffic.

A detailed introduction is further provided below for the above-mentioned example implementation process:
The MCE can reuse a procedure "MBMS SCHEDULING INFORMATION" on a existing M2 interface in a 3GPP protocol, and the MCE sends an MBMS SCHEDULING INFORMATION message to one or more eNBs under the control of the MCE to notify the above-mentioned one or more eNBs of MBSFN subframe configuration information under each MBSFN area. By means of the MBMS SCHEDULING INFORMATION messages sent by the MCE to the above-mentioned eNBs, the MCE configures various eNBs with one or more MBSFN subframes, wherein the above-mentioned MBSFN subframes not only include: MBSFN subframes for conducting the MBMS service, but also include: MBSFN subframes for the ICIC function.

In an example embodiment, an MBMS SCHEDULING INFORMATION procedure can be used for configuring the ABS subframes (i.e. configure MBSFN subframes for the ICIC function), and the method thereof is as follows:

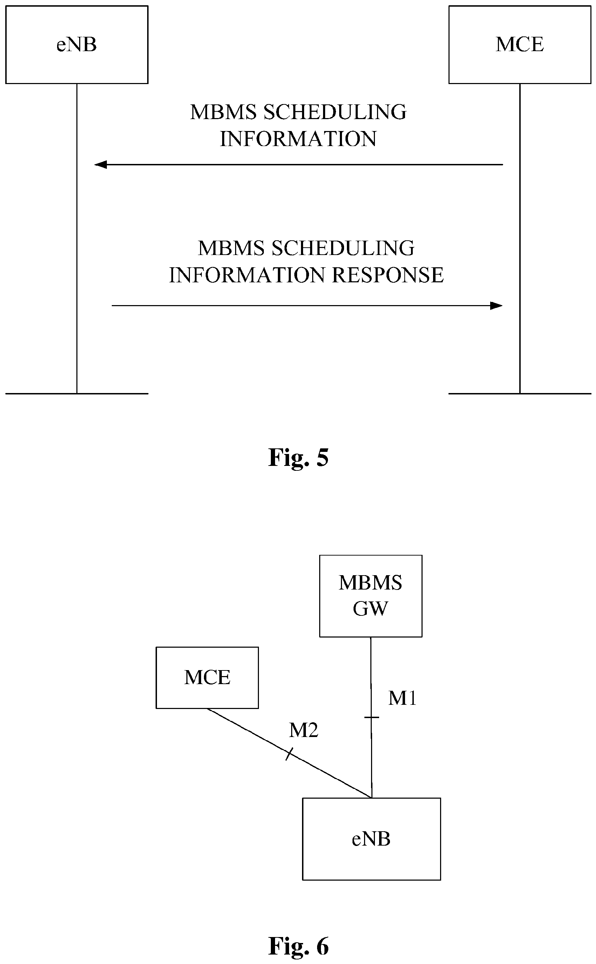

Fig. 5 is a schematic diagram of an MBMS scheduling information procedure according to an example embodiment of the present invention. As shown in Fig. 5, in the MBMS SCHEDULING INFORMATION procedure on the M2 interface according to a 3GPP 36.4333 protocol, an MBMS SCHEDULING INFORMATION message sent by an MCE to eNBs may include: MBSFN subframe information allocated for each MBSFN area.

In the above-mentioned message, the MCE can allocated separate MBSFN area IDs for MBSFN subframes for a ICIC function, that is, MBSFN subframes allocated for the MBSFN area refer to ABS subframes for ICIC, instead of MBSFN subframes for conducting the MBMS service. In summary, by means of different MBSFN area IDs, the MCE separates the MBSFN subframes for the MBMS service from the MBSFN subframes for the ICIC and makes them to be independent from each other.

In addition to the above-mentioned method of appointing MBSFN area IDs, the following method can also be used: because the MBSFN subframes configured for the corresponding MBSFN area IDs are used for ABS subframes use, instead of for the MBMS service, the MCE may not include physical multicast channel (PMCH) configuration information in the message (i.e. configuration information required for opening an MBMS service). Thus, after having read the above-mentioned message, the eNB not only can obtain MBSFN subframe configuration information of one MBSFN area, but also can discover that in the MBSFN area, PMCH configuration information for conducting the MBMS service is not configured, thereby learning that MBSFN subframe configuration of the MBSSFN area is the ABS subframe for ICIC. For example, each MBSFN area ID corresponds to {PMCH configuration information, MBSFN subframe configuration parameters}, wherein the PMCH configuration information is configured to be empty. The advantage of using the method lies in that MBSFN subframes can be configured through the existing MBMS SCHEDULING INFORMATION procedure of the 3GPP, and the eNB can also be enabled to learn that the above-mentioned MBSFN subframes are ABS subframes instead of the MBMS service. In short, the MBSFN subframes mentioned in the present invention are MBSFN subframes for the ICIC function. However, in the actual operation process, the MBSFN subframes configured by the MCE not only may include the MBSFN subframes for conducting the MBMS service, but also may include the MBSFN subframes for ABS subframes (i.e. for the ICIC).

In addition to the above-mentioned method of using the appointed MBSFN area IDs so as to indicate that the MBSFN area ID corresponds the ICIC area, and in addition to the method of only configuring a certain MBSFN area ID with one or more MBSFN subframes and not PMCH parameters so as to indicate that the MBSFN area is an ICIC area and the corresponding MBSFN subframes are ABS subframes, the technical solutions provided in the present invention can also use the following method: Fig. 6 is a schematic diagram of an E-MBMS logical architecture according to an example embodiment of the present invention. As shown in Fig. 6, according to the 3GPP protocol, an M2 interface between an eNB (i.e. a base station mentioned in the present invention) and an MCE, i.e. an E-UTRAN internal control plane interface, is used for transmitting messages and procedures of a control plane, and configuring MBSFN areas and MBSFN subframe configuration information and PMCH configuration information for each MBSFN area, etc.; an M1 interface between the eNB and an MBMS gateway (MBMS GW), i.e. a user plane interface, is used for transmitting data of the user plane, that is, the MBMS GW sends data for opening an MBMS service to the eNB. According to relevant provisions of the 3GPP protocol, the eNB receives the control plane messages or procedures of the M2 interface to obtain configuration information about several MBSFN areas, and receives user plane data of the M1 interface to obtain data for opening the MBMS service of the corresponding MBSFN area. The MBSFN subframe configuration information of one or more MBSFN areas which is sent by the MCE to base stations under the control of the MCE via messages and procedures of the M2 interface may or may not include PMCH configuration information, and the MBMS GW sends the MBMS user data of the above-mentioned MBSFN areas to the base stations via the M1 interface.

It should be noted that, in the above-mentioned one or more MBSFN areas, with regard to MBSFN areas which bear the MBMS service, corresponding MBMS user data is sent by the MBMS GW through the M1 interface, while with regard to the MBSFN areas which do not bear the MBMS service and are used for the ICIC function, corresponding MBMS user data is not sent by the MBMS GW through the M1 interface, that is, for this or these ICIC areas, the user data through the M1 interface is empty. Hereby, after receiving a message (for example, an MBMS scheduling information message) through the M2 interface from the MCE, each base station under the control of the MCE learns that the MCE configures it with several MBSFN areas and MBSFN subframe configuration information and PMCH configuration information corresponding to each MBSFN area; meanwhile, the base station receives data through the M1 interface of the MBMS GW, and if certain or some of the above-mentioned MBSFN areas may do not transmit data through the M1 interface, then the base station determines that the MBSFN subframes configured by this or these MBSFN areas are not for bearing the MBMS service. Furthermore, if the base station is a micro base station or abase station of a victim cell, then the base station can send data in the data field of the MBSFN subframe; and if the base station is a macro base station or a base station of an aggressor cell, then the base station does not send data in the data field of the MBSFN subframe, that is, the data field of the MBSFN subframe keeps in an idle status.

In summary, the features of the method lie in the following features:
Feature one, the MCE sends control messages for the base stations under the control of the MCE by means of the messages or procedures of the M2 interface, for example, by means of the MBMS scheduling information messages or procedures; and the above-mentioned messages or procedures may include: MBMS subframe configuration information of one or more MBSFN areas (and may or may not include PMCH configuration information).

Feature two, the MBMS GW sends MBMS service data for the base stations via the M1 interface; if the MBMS service data includes MBMS service data of several of the above-mentioned MBSFN areas, then this or these areas are MBSFN areas for bearing the MBMS service; and if the MBMS service data does not include MBMS service data of several of the above-mentioned MBSFN areas, then this or these areas are not MBSFN areas for bearing the MBMS service.

Feature three, after receiving the message from the M2 interface of the MCE, the base station learns to which MBSFN area(s) it belongs and MBSFN subframe configuration information of the base station corresponding to each MBSFN area.

Feature four, after receiving service data through the M1 interface of the MBMS GW, the base station learns which of the above-mentioned MBSFN areas does or do not send the MBMS service data; and with regard to the MBSFN area(s) which does or do not send the MBMS service data, in the data field(s) of the MBSFN subframes of this or these MBSFN areas, the macro base station (or the base station of the aggressor cell) does not send data; and the micro base station (or the base station of the victim cell) sends data.

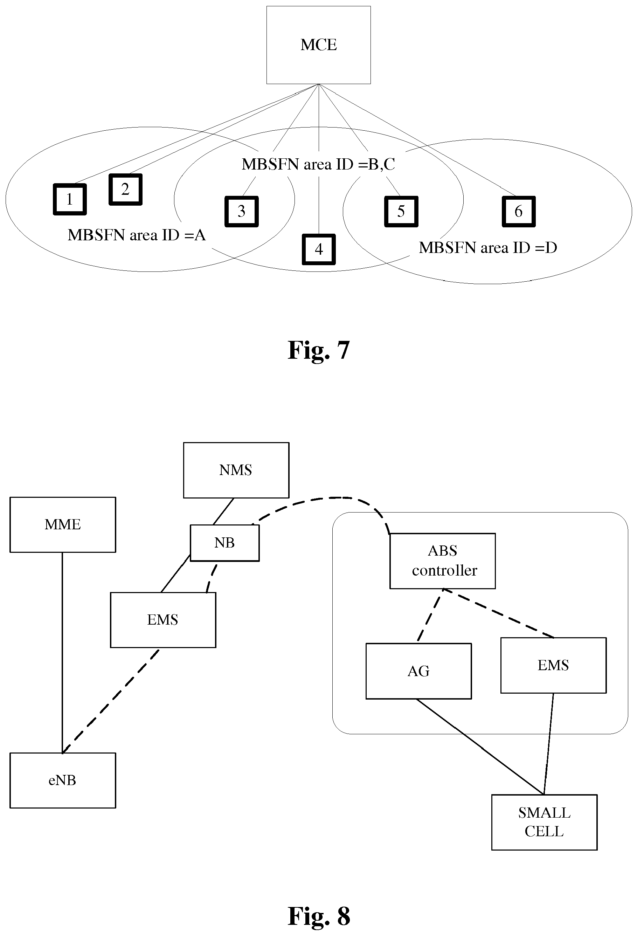

Description is provided below using an example. Fig. 7 is a schematic diagram of configuring ICIC areas according to an example embodiment of the present invention. As shown in Fig. 7, there are several MBSFN areas carrying MBMS service, which respectively correspond to MBSFN area ID=A and MBSFN area ID=B; there are also several areas needing to serve as ICIC areas, which respectively correspond to MBSFN area ID=C and MBSFN area ID=D. There are base station 1, base station 2 and base station 3 in area A; base station 3, base station 4 and base station 5 in areas B and C; and base station 5 and base station 6 in area D.

In a MBMS SCHEDULING INFORMATION message which is sent from the MCE to the eNB, with regard to MBSFN area ID=A, B, the MCE respectively configures MBSFN subframe information and PMCH information of each area, i.e. including: {PMCH configuration information, MBSFN subframe configuration parameters}, wherein the PMCH configuration information is configuration parameters of the MBMS service in the MBSFN area. With regard to MBSFN area ID=C, D, the MCE respectively configures the MBSFN subframe information of each area, without needing to configure PMCH configuration information (i.e. PMCH configuration information is configured to be empty); after the eNB receives the above-mentioned message, with regard to MBSFN area ID=A, B, the eNB learns that these areas are MBSFN subframes for the MBMS service; and with regard to MBSFN area ID=C, D, the eNB learns that these areas are MBSFN subframes for the ABS subframes.

In the example embodiment, different eNBs may have different actions after receiving the above-mentioned MBMS SCHEDULING INFORMATION message from the MCE, which specifically can be divided into that some eNBs understand that MBSFN subframes of MBSFN areas in which the PMCHs are not configured are ABS subframes, but some eNBs only know that these MBSFN subframes cannot perform the MBMS service (because only the MBSFN subframes are configured but no PMCH information is configured in the MBSFN area) but do not know that these are ABS subframes, and with regard to these eNBs, these MBSFN subframes can be considered to be idle subframes. Generally, the former eNBs are micro base stations and the latter eNBs are macro base stations. According to the current ICIC function, the macro base stations will not send contents on these MBSFN subframes (because these subframes have no corresponding PMCH configured), and then they will not interfere other micro base stations; while the micro base stations can know that these subframes are actually ABS subframes and allow for other service to be carried. In the technical solutions provided in the present invention, macro base stations are generally base stations of a aggressor cell, and micro base stations are base stations of a victim cell.

In the above-mentioned various MBSFN area IDs, although the MBSFN area IDs are different and representative of different areas (i.e. different MBMS service areas or different ICIC areas), these areas can be the same geographically and be one overlapping area, for example, MBSFN areas B and C are overlapped physically. Meanwhile, one eNB can belong to one or more MBSFN areas at the same time, for example, base station 3 and base station 5 respectively belong to more MBSFN areas.

Assuming that there is one area which may include more eNBs, and these eNBs are all controlled by the same MCE, the MCE allocates MBSFN subframes for these eNB by means of MBMS SCHEDULING INFORMATION message, and through two different MBSFN area IDs, these MBSFN subframes respectively belong to these two MBSFN areas: one area is for the MBMS service and the other area is for the ICIC. As shown in Fig. 7, MBSFN areas B and C are overlapped physically, and accordingly, MBSFN areas B and C allocated for base station 3, base station 4 and base station 5 are respectively for the MBMS service and the ICIC function.

By using this method for independently configuring MBSFN areas for each ICIC area, MBSFN subframes for the ICIC function can be flexibly configured, and the MCE not only can establish and delete ICIC areas but also can adjust ABS subframes in certain or some established ICIC area(s) through an MBMS SCHEDULING INFORMATION procedure, that is, can increase or decrease ABS subframes allocated for certain or some ICIC area(s). In addition, by using the method, the eNB can judge whether it belongs to the area corresponding to the MBSFN area ID according to the MBSFN area to which it belongs and MBSFN area IDs in the received MBMS SCHEDULING INFORMATION, and if so, then further learn whether the MBSFN subframes allocated for the area are for the MBMS service or for the ICIC function according to the MBSFN subframe configuration information and PMCH configuration information corresponding to the MBSFN area ID. For example, with regard to the base station 3, when the MBMS SCHEDULING INFORMATION message sent from the MCE is received and configuration information corresponding to MBSFN areas A, B, C and D is read, the operations are specifically as follows:
(1) the eNB acquires MBMS configuration information (including: MBSFN subframe configuration and PMCH configuration) related to the MBMS service of areas A and B;
(2) the eNB acquires MBSFN subframe information of area C and learn that these MBSFN subframes are used for the ICIC function according to the configuration information of the area C; and
(3) the eNB has known that it does not belong to the coverage range of area D, and does not need to read MBSFN subframe information of the area D.

In addition to the above-mentioned MBMS SCHEDULING INFORMATION procedure, the MCE can also notify the eNB the configured ABS subframes by means of other messages or procedures, for example, the MCE notifies the eNB of the configured ABS subframes through one of the following procedures of the M2 interface:
an MCE CONFIGURATION UPDATE procedure;
an MBMS SESSION START procedure;
an MBMS SESSION STOP procedure; and
an MBMS SESSION UPDATE procedure.

The MCE can configures ABS subframes for one or more eNBs by sending MBMS SCHEDULING INFORMATION messages to eNBs under the control of the MCE. Furthermore, with regard to different eNBs, after having received the above-mentioned ABS subframes, methods for processing the received ABS subframes can be different, for example, a macro base station does not send data contents on the received ABS subframe, while a micro base station can send data with limited power on the received ABS subframe.

An aggressor cell sends or does not send a signal when the ABS subframe reduces the power, so as to avoid interferences to a victim cell. Therefore, the MCE needs to further notice different base stations of different behaviours to be adopted after these ABS subframes are received. The particular notification methods are as follows:
(1) A pre-appointment method is adopted, wherein each base station can learn whether the base station itself is a macro base station or a micro base station, and thus the macro base station does not send data on the ABS subframe and the micro base station works normally.
(2) The MCE respectively instructs different eNBs to use different processing modes by means of the message or procedure of the M2 interface, for example, instructing each base station whether to send data on the ABS subframe, which is equivalent to notifying whether each eNB is a macro base station or a micro base station. The message can be one of the following procedures:
   an MCE CONFIGURATION UPDATE procedure;
   an MBMS SESSION START procedure;
   an MBMS SESSION STOP procedure; and
   an MBMS SESSION UPDATE procedure.

### Example embodiment two

Fig. 8 is a schematic diagram of configuring an ABS using a network management configuration interface according to an example embodiment of the present invention. As shown in Fig. 8, in the example embodiment, assumed that the macro base station supports a static configuration scheme of an eICIC, that is, the configuration of ABS subframes can be performed through a northbound interface, wherein the northbound interface is generally open to operators.

An ABS control component, for example, a software component integrated in an AG or an independent self-organized network server (SON Server), serves as a control point for ABS information collection and processing; and the ABS control component can calculate the required number of ABSs according to the current load of the micro base station and send the required number of ABSs to an element management system (EMS) by means of a network management system (NMS) or directly through a northbound interface to finally complete ICIC configuration.

In the example embodiment, the method is dependent on the processing capacity of the network management configuration interface, and is poor in real-time compared to the above-mentioned method using an M2 interface. For example, the M2 interface can achieve a 10ms magnitude; while the network management configuration interface can only be above a 10s magnitude and can only perform a semi-persistent adjustment.

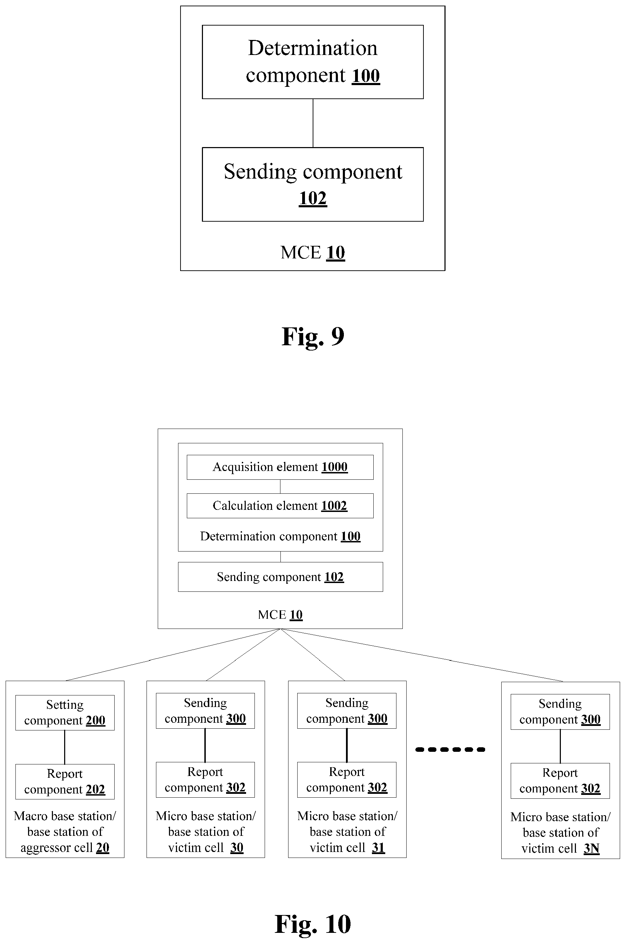

Fig. 9 is a structural block diagram of a system for processing configuration information according to an embodiment of the present invention. As shown in Fig. 9, the system for processing configuration information may include: an MCE **10,** wherein the MCE **10** may include: a determination component **100** is configured to determine ABS configuration information corresponding to each base station of one or multiple base stations, wherein the one or multiple base stations are all controlled by the MCE, and the one or multiple base stations constitute one or more ICIC areas; and an sending component **102** is configured to send the ABS configuration information, corresponding to each ICIC area of the one or more ICIC areas, to each base station of one or multiple base stations in the ICIC area.

With the system as shown in Fig. 9, the problem in the related art that the ABS status information and the ABS configuration information being transmitted among various base stations is achieved only using messages and procedures of an X2 interface between the two of the various base stations increases the difficulty of actual deployment of the base stations is solved, and thus it is achieved that, when more base stations all belong to the same MBSFN area (i.e. the ICIC areas under the control of the same MCE), the transfer of the ABS status information and the ABS configuration information is completed between the MCE and one of various base stations under the control of the MCE via the MCE, thereby achieving the ICIC function.

In an example implementation process, the multiple base stations in each ICIC area of the above-mentioned one or more ICIC areas may include: one macro base station and one or more pico base stations, or one base station of the aggressor cell and one or multiple base stations of one or more victim cells.

In an example embodiment, the above-mentioned determination component **100** is configured to allocate, for each ICIC area in the one or more ICIC areas, multimedia broadcast multicast service single frequency network (MBSFN) area identifier (ID) information corresponding to the ICIC area, wherein, after reading the MBSFN area ID information, one or multiple base stations in the ICIC area determine that an area corresponding to the MBSFN area ID information is an ICIC area; and the MBSFN area ID information is used for indicating that an MBSFN subframe acquired by one or multiple base stations in the ICIC area corresponding to the MBSFN area ID information from the MCE is an ABS subframe for the ICIC; or, the determination component **100** is configured to allocate, through configuring a multimedia broadcast multicast service, MBMS, scheduling information message for each base station of one or multiple base stations in each ICIC area, to each ICIC area of the one or more ICIC areas the ABS configuration information corresponding to the ICIC area, wherein the MBMS scheduling information message carries MBSFN area ID information and MBSFN subframe configuration information corresponding to the ICIC area, and an information element corresponding to physical multicast channel (PMCH) configuration information is configured to be empty; and after reading the MBSFN area ID information, the one or multiple base stations in the ICIC area determine that an area corresponding to the MBSFN area ID information is an ICIC area and determine that an MBSFN subframe acquired from the MCE is an ABS subframe for the ICIC according to the MBSFN subframe configuration information; or, the determination component **100** is configured to configure through a message and a procedure of an M2 interface, configuration information of one or more MBSFN areas for the one or multiple base stations under the control of the MCE, wherein the configuration information of at least one MBSFN area of the one or more MBSFN areas carries MBSFN area ID information corresponding to an ICIC area to which the base station belongs and corresponding MBSFN subframe configuration information; meanwhile, an MBMS gateway only sends data for bearing an MBMS service to one or multiple base stations under the control of the MCE via an M1 interface, and one or multiple base stations in each MBSFN area of the one or more MBSFN areas determine, according to MBMS data content of an area corresponding to the MBSFN area ID information having been configured to empty, that the area corresponding to the MBSFN area ID information is an ICIC area and determine that an MBSFN subframe acquired from the MCE is the ABS subframe for ICIC.

In an example embodiment, the above-mentioned system may further include: one macro base station and one or more micro base stations, or one base station of an aggressor cell or one or multiple base stations of a victim cell, wherein the macro base station or a base station of the aggressor cell **20** may include: a setting component **200** is configured to set a data field on the MBSFN subframe acquired from the MCE to be in an idle status; and the micro base station or the base station of the victim cell **30** can include: a sending component **300** is configured to send data in the data field on the MBSFN subframe acquired from the MCE.

In an example embodiment, as shown in Fig. 10, the determination component **100** may include: an acquisition element **1000** is configured to acquire the ABS status information corresponding to each base station of the one or multiple base stations, wherein the ABS status information corresponding to each base station carries ABS configuration information currently used by the base station and/or ABS configuration information to be acquired; and a calculation element **1002** is configured to calculate the ABS configuration information corresponding to each base station of the one or multiple base stations according to the acquired ABS status information corresponding to each base station of the one or multiple base stations.

In an example embodiment, as shown in Fig. 10, the above-mentioned macro base station or the base station of the aggressor cell **20** can also include: a report component **202** is configured to report the ABS status information corresponding to the base station to the MCE; and the micro base station or the base station of the victim cell **30** can further include: a report component **302** is configured to report the ABS status information corresponding to the base station to the MCE.

In an example implementation process, the report component **200** is configured to report the ABS status information corresponding to the base station to the MCE by one of the following manners: an operation and maintenance station, a network management system configuration interface, and a message or a procedure of the M2 interface.

In an example implementation process, the sending component **102** is configured to send, to each base station of the one or multiple base stations, the ABS configuration information corresponding to the base station by one of the following manners: an operation and maintenance station, a network management system configuration interface, and a message or a procedure of the M2 interface.

From the above description, it can be seen that the above-mentioned embodiments achieve the following technical effects (it should be noted that these effects are effects that can be achieved by some example embodiments): the problem in the related art that the ABS status information and the ABS configuration information being transmitted among various base stations is achieved only using messages and procedures of an X2 interface between the two of the various base stations increases the difficulty of actual deployment of the base stations is solved, and thus it is achieved that, when more base stations all belong to the same MBSFN area (i.e. the ICIC areas under the control of the same MCE), the transfer of the ABS status information and the ABS configuration information is completed between the MCE and one of various base stations under the control of the MCE, thereby achieving the ICIC function.

### Industrial applicability

As described above, a method and system for processing configuration information provided according to the embodiments of the present invention have the following beneficial effects: when more base stations all belong to the same MBSFN area (i.e. the ICIC areas under the control of the same MCE), the transfer of the ABS status information and the ABS configuration information is completed between the MCE and one of various base stations under the control of the MCE, thereby achieving the ICIC function.

Obviously, those skilled in the art should know that each of the mentioned components or steps of the present invention may be realized by universal computing devices; the components or steps may be focused on single computing device, or distributed on the network formed by multiple computing devices; selectively, they may be realized by the program codes which may be executed by the computing device; thereby, the components or steps may be stored in the storage device and executed by the computing device; and under some circumstances, the shown or described steps may be executed in different orders, or may be independently manufactured as each integrated circuit component, or multiple components or steps thereof may be manufactured to be single integrated circuit component, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

## Claims

1. A method for processing configuration information, comprising:
determining, by a multi-cell/multi-media cooperation entity, MCE, almost blank subframe, ABS, configuration information corresponding to each base station of one or multiple base stations, wherein the one or multiple base stations are all controlled by the MCE, and the one or multiple base stations constitute one or more inter-cell interference coordination, ICIC, areas (S402); and
sending, by the MCE, the ABS configuration information corresponding to each ICIC area of the one or more ICIC areas, to each base station of one or multiple base stations in the ICIC area (S404);
**characterized in that** determining, by the MCE, the ABS configuration information corresponding to each base station of the one or multiple base stations comprises: allocating, by the MCE for each ICIC area in the one or more ICIC areas, multimedia broadcast multicast service single frequency network, MBSFN, area identifier, ID, information corresponding to the ICIC area, wherein after reading the MBSFN area ID information, one or multiple base stations in the ICIC area determine that an area corresponding to the MBSFN area ID information is an ICIC area; and the MBSFN area ID information is used for indicating that an MBSFN subframe acquired from the MCE by the one or multiple base stations in the ICIC area corresponding to the MBSFN area ID information is an ABS subframe for ICIC; or, allocating, by the MCE through configuring a multimedia broadcast multicast service, MBMS, scheduling information message for each base station of the one or multiple base stations in each ICIC area of the one or more ICIC areas, to each ICIC area of the one or more ICIC areas the ABS configuration information corresponding to the ICIC area, wherein the MBMS scheduling information message carries MBSFN area ID information and MBSFN subframe configuration information corresponding to the ICIC area, and an information element corresponding to physical multicast channel, PMCH, configuration information is configured to be empty; and after reading the MBSFN area ID information, the one or multiple base stations in the ICIC area determine that an area corresponding to the MBSFN area ID information is an ICIC area and determine, according to the MBSFN subframe configuration information, that an MBSFN subframe acquired from the MCE is an ABS subframe for ICIC; or, configuring, by the MCE through a message and a procedure of an M2 interface, configuration information of one or more MBSFN areas for the one or multiple base stations under the control of the MCE, wherein the configuration information of at least one MBSFN area of the one or more MBSFN areas carries MBSFN area ID information corresponding to an ICIC area to which the base station belongs and corresponding MBSFN subframe configuration information, meanwhile, an MBMS gateway only sends data for bearing an MBMS service to the one or multiple base stations under the control of the MCE via an M1 interface; and one or multiple base stations in each MBSFN area of the one or more MBSFN areas determine, according to MBMS data content of an area corresponding to the MBSFN area ID information having been configured to empty, that the area corresponding to the MBSFN area ID information is an ICIC area and determine that an MBSFN subframe of the ICIC area is an ABS subframe for ICIC.

2. The method according to claim 1, wherein the multiple base stations in each ICIC area of the one or more ICIC areas comprise: one macro base station and one or more pico base stations, or one base station of an aggressor cell and one or multiple base stations of one or more victim cells.

3. The method according to claim 1, wherein after sending, by the MCE, the ABS configuration information corresponding to each ICIC area to each base station of the one or multiple base stations in each ICIC area of the one or more ICIC areas, the method further comprises:
a macro base station or a base station of an aggressor cell configuring a data field on the MBSFN subframe acquired from the MCE to be in an idle status; and
a pico base station or a base station of a victim cell sending data in the data field on the MBSFN subframe acquired from the MCE.

4. The method according to claim 1, wherein determining, by the MCE, the ABS configuration information corresponding to each base station of the one or multiple base stations comprises:
acquiring, by the MCE, ABS status information corresponding to each base station of the one or multiple base stations, wherein the ABS status information corresponding to each base station carries ABS configuration information currently used by the base station and/or ABS configuration information to be acquired; and
calculating, by the MCE, the ABS configuration information corresponding to each base station of the one or multiple base stations according to the acquired ABS status information corresponding to each base station of the one or multiple base stations.

5. The method according to claim 4, 2. wherein before acquiring, by the MCE, the ABS status information corresponding to each base station of the one or multiple base stations, the method further comprises:
reporting, by each base station of the one or multiple base stations, the ABS status information corresponding to the base station to the MCE.

6. The method according to claim 5, wherein each base station of the one or multiple base stations reports the ABS status information corresponding to the base station to the MCE by one of the following manners:
an operation and maintenance station, a network management system configuration interface, and a message or a procedure of the M2 interface.

7. The method according to any one of claims 1 to 6 wherein the MCE sends, to each base station of the one or multiple base stations, the ABS configuration information corresponding to the base station by one of the following manners:
an operation and maintenance station, a network management system configuration interface, and a message or a procedure of the M2 interface.

8. A system for processing configuration information, comprising: a multi-cell/multi-media cooperation entity, MCE, (10);
the MCE comprising:
a determination component (100) configured to determine almost blank subframe, ABS, configuration information corresponding to each base station of one or multiple base stations, wherein the one or multiple base stations are all controlled by the MCE, and the one or multiple base stations constitute one or more inter-cell interference coordination, ICIC, areas; and
an sending component (102) configured to send the ABS configuration information corresponding to each ICIC area of the one or more ICIC areas, to each base station of one or multiple base stations in the ICIC area.
**characterized in that** the determination component (100) configured to allocate, for each ICIC area in the one or more ICIC areas, multimedia broadcast multicast service single frequency network, MBSFN, area identifier, ID, information corresponding to the ICIC area, wherein after reading the MBSFN area ID information, one or multiple base stations in the ICIC area determine that an area corresponding to the MBSFN area ID information is an ICIC area; and the MBSFN area ID information is used for indicating that an MBSFN sub frame acquired from the MCE by one or multiple base stations in the ICIC area corresponding to the MBSFN area ID information is an ABS subframe for ICIC; or, the determination component (100) configured to allocate, through configuring a multimedia broadcast multicast service, MBMS, scheduling information message for each base station of one or multiple base stations in each ICIC area of the one or more ICIC areas, to each ICIC area of the one or more ICIC areas the ABS configuration information corresponding to the ICIC area, wherein the MBMS scheduling information message carries MBSFN area ID information and MBSFN subframe configuration information corresponding to the ICIC area, and an information element corresponding to physical multicast channel, PMCH, configuration information is configured to be empty; and after reading the MBSFN area ID information, the one or multiple base stations in the ICIC area determine that an area corresponding to the MBSFN area ID information is an ICIC area and determine, according to the MBSFN subframe configuration information, that an MBSFN subframe acquired from the MCE is an ABS subframe for the ICIC; or, the determination component (100) configured to configure through a message and a procedure of an M2 interface, configuration information of one or more MBSFN areas for the one or multiple base stations under the control of the MCE wherein the configuration information of at least one MBSFN areas of the one or more MBSFN areas carries MBSFN area ID information corresponding to an ICIC area to which the base station belongs and corresponding MBSFN subframe configuration information, meanwhile, an MBMS gateway only sends data for bearing an MBMS service to one or multiple base stations under the control of the MCE via an M1 interface, and one or multiple base stations in each MBSFN area of the one or more MBSFN areas determine, according to MBMS data content of an area corresponding to the MBSFN area ID information having been configured to empty, that the area corresponding to the MBSFN area ID information is an ICIC area and determine that an MBMS subframe of the ICIC area is an ABS subframe for ICIC.

9. The system according to claim 8, wherein the multiple base stations in each ICIC area of the one or more ICIC areas comprises: one macro base station and one or more pico base stations, or one base station of an aggressor cell and one or multiple base stations of one or more victim cells.

10. The system according to claim 9, wherein the system further comprises: one macro base station and one or more micro base stations, or one base station of an aggressor cell or one or multiple base stations of a victim cell;
the macro base station or a base station of the aggressor cell (20) comprising:
a setting component (200) configured to configure a data field on the MBSFN subframe acquired from the MCE to be in an idle status; and
the micro base station or the base station of the victim cell (30) comprising:
a sending component (300) configured to send data in the data field on the MBSFN subframe acquired from the MCE.

11. The system according to claim 10, wherein the determination component (100) comprises:
an acquisition element (1000) configured to acquire ABS status information corresponding to each base station of the one or multiple base stations, wherein the ABS status information corresponding to each base station carries ABS configuration information currently used by the base station and/or ABS configuration information to be acquired; and
a calculation element (1002) configured to calculate the ABS configuration information corresponding to each base station of the one or multiple base stations according to the acquired ABS status information corresponding to each base station of the one or multiple base stations.

12. The system according to claim 11,
each base station of the one or multiple base stations under the control of the MCE (30) comprises:
a report component (302) configured to report the ABS status information corresponding to the base station to the MCE.

13. The system according to claim 12, wherein the report component (302) is configured to report the ABS status information corresponding to the base station to the MCE by one of the following manners: an operation and maintenance station, a network management system configuration interface, and a message or a procedure of the M2 interface.

14. The system according to any one of claims 8 to 13, wherein the sending component (102) is configured to send, to each base station of the one or multiple base stations, the ABS configuration information corresponding to the base station by one of the following manners: an operation and maintenance station, a network management system configuration interface, and a message or a procedure of the M2 interface.

## Patentansprüche

1. Verfahren zum Verarbeiten von Konfigurationsinformationen, umfassend:
Bestimmen, durch eine Multi-Cell/Multi-Media Cooperation Entity, MCE, von Almost Blank Subframe-, ABS, Konfigurationsinformationen, die jeder Basisstation aus einer oder mehreren Basisstationen entsprechen, wobei die eine oder mehreren Basisstationen alle von der MCE gesteuert werden, und die eine oder mehreren Basisstationen einen oder mehrere Inter-Cell Interference Coordination-, ICIC, Bereiche darstellen (S402); und
Senden, durch die MCE, der jedem ICIC-Bereich aus dem einen oder mehreren ICIC-Bereichen entsprechenden ABS-Konfigurationsinformationen an jede Basisstation aus einer oder mehreren Basisstationen im ICIC-Bereich (S404) ;
**dadurch gekennzeichnet, dass** das Bestimmen, durch die MCE, der jeder Basisstation aus der einen oder mehreren Basisstationen entsprechenden ABS-Konfigurationsinformationen umfasst: Zuweisen, durch die MCE für jeden ICIC-Bereich in dem einen oder mehreren ICIC-Bereichen, von Multimedia Broadcast Multicast Service Single Frequency Network-, MBSFN, Bereichs-Identifikator-, ID, Informationen, die dem ICIC-Bereich entsprechen, wobei nach Lesen der MBSFN-Bereichs-ID-Informationen eine oder mehrere Basisstationen im ICIC-Bereich bestimmen, dass ein Bereich den MBSFN-Bereichs-ID-Informationen entsprechend ein ICIC-Bereich ist; und die MBSFN-Bereichs-ID-Informationen verwendet werden, um anzugeben, dass ein MBSFN-Subframe, der von der einen oder mehreren Basisstationen im ICIC-Bereich von der MCE bezogen wurde, den MBSFN-Bereichs-ID-Informationen entsprechend ein ABS-Subframe für ICIC ist; oder Zuweisen, durch die MCE über Konfigurieren einer Multimedia Broadcast Multicast Service-, MBMS, Planungsinformationen-Nachricht für jede Basisstation aus der einen oder mehreren Basisstationen in jedem ICIC-Bereich aus dem einen oder mehreren ICIC-Bereichen, zu jedem ICIC-Bereich aus dem einen oder mehreren ICIC-Bereichen, der dem ICIC-Bereich entsprechenden ABS-Konfigurationsinformationen, wobei die MBMS-Planungsinformationen-Nachricht dem ICIC-Bereich entsprechende MBSFN-Bereichs-ID-Informationen und MBSFN-Subframe-Konfigurationsinformationen übermittelt, und ein Informationselement, das Physical Multicast Channel-, PMCH, Konfigurationsinformationen entspricht, so konfiguriert wird, dass es leer ist; und nach Lesen der MBSFN-Bereichs-ID-Informationen die eine oder mehreren Basisstationen im ICIC-Bereich bestimmen, dass ein Bereich den MBSFN-Bereichs-ID-Informationen entsprechend ein ICIC-Bereich ist und gemäß den MBSFN-Subframe-Konfigurationsinformationen bestimmen, dass ein MBSFN-Subframe, der von der MCE bezogen wurde, ein ABS-Subframe für ICIC ist; oder Konfigurieren, durch die MCE über eine Nachricht und einen Vorgang einer M2-Schnittstelle, von Konfigurationsinformationen von einem oder mehreren MBSFN-Bereichen für die eine oder mehreren Basisstationen unter der Steuerung der MCE, wobei die Konfigurationsinformationen von mindestens einem MBSFN-Bereich aus dem einen oder mehreren MBSFN-Bereichen MBSFN-Bereichs-ID-Informationen, die einem ICIC-Bereich entsprechen, zu welchem die Basisstation gehört, und entsprechende MBSFN-Subframe-Konfigurationsinformationen übermitteln, während ein MBMS-Gateway nur Daten sendet, um einen MBMS-Dienst an die eine oder mehreren Basisstationen unter der Steuerung der MCE via eine M1-Schnittstelle zu übertragen; und eine oder mehrere Basisstationen in jedem MBSFN-Bereich aus dem einen oder mehreren MBSFN-Bereichen gemäß MBMS-Dateninhalt eines Bereichs den MBSFN-Bereichs-ID-Informationen entsprechend, die so konfiguriert wurden, dass sie leer sind, bestimmen, dass der Bereich den MBSFN-Bereichs-ID-Informationen entsprechend ein ICIC-Bereich ist, und bestimmen, dass ein MBSFN-Subframe des ICIC-Bereichs ein ABS-Subframe für ICIC ist.

2. Verfahren nach Anspruch 1, wobei die mehreren Basisstationen in jedem ICIC-Bereich aus dem einen oder mehreren ICIC-Bereichen umfassen: eine Makro-Basisstation und eine oder mehrere Pico-Basisstationen, oder eine Basisstation einer Aggressorzelle und eine oder mehrere Basisstationen von einer oder mehreren Opferzellen.

3. Verfahren nach Anspruch 1, wobei nach dem Senden, durch die MCE, der jedem ICIC-Bereich entsprechenden ABS-Konfigurationsinformationen an jede Basisstation aus der einen oder mehreren Basisstationen in jedem ICIC-Bereich aus dem einen oder mehreren ICIC-Bereichen das Verfahren weiter umfasst:
Konfigurieren, durch eine Makro-Basisstation oder eine Basisstation einer Aggressorzelle, eines Datenfeldes auf dem MBSFN-Subframe, der von der MCE bezogen wurde, so, dass es sich in einem Leerlaufzustand befindet; und
Senden, durch eine Pico-Basisstation oder eine Basisstation einer Opferzelle, von Daten in dem Datenfeld auf dem MBSFN-Subframe, der von der MCE bezogen wurde.

4. Verfahren nach Anspruch 1, wobei das Bestimmen, durch die MCE, der jeder Basisstation aus der einen oder mehreren Basisstationen entsprechenden ABS-Konfigurationsinformationen umfasst:
Beziehen, durch die MCE, von ABS-Zustandsinformationen, die jeder Basisstation aus der einen oder mehreren Basisstationen entsprechen, wobei die jeder Basisstation entsprechenden ABS-Zustandsinformationen ABS-Konfigurationsinformationen, die aktuell von der Basisstation verwendet werden, und/oder ABS-Konfigurationsinformationen übermitteln, die bezogen werden sollen; und
Berechnen, durch die MCE, der jeder Basisstation aus der einen oder mehreren Basisstationen entsprechenden ABS-Konfigurationsinformationen gemäß den bezogenen ABS-Zustandsinformationen, die jeder Basisstation aus der einen oder mehreren Basisstationen entsprechen.

5. Verfahren nach Anspruch 4, wobei vor dem Beziehen, durch die MCE, der jeder Basisstation aus der einen oder mehreren Basisstationen entsprechenden ABS-Zustandsinformationen das Verfahren weiter umfasst:
Berichten, durch jede Basisstation aus der einen oder mehreren Basisstationen, der der Basisstation entsprechenden ABS-Zustandsinformationen an die MCE.

6. Verfahren nach Anspruch 5, wobei jede Basisstation aus der einen oder mehreren Basisstationen die der Basisstation entsprechenden ABS-Zustandsinformationen über eine der folgenden Weisen an die MCE berichtet:
eine Betriebs- und Wartungsstation, eine Netzwerkmanagementsystem-Konfigurationsschnittstelle, und eine Nachricht oder einen Vorgang der M2-Schnittstelle.

7. Verfahren nach einem der Ansprüche 1 bis 6, wobei die MCE die der Basisstation entsprechenden ABS-Konfigurationsinformationen über eine der folgenden Weisen an jede Basisstation aus der einen oder mehreren Basisstationen sendet:
eine Betriebs- und Wartungsstation, eine Netzwerkmanagementsystem-Konfigurationsschnittstelle, und eine Nachricht oder einen Vorgang der M2-Schnittstelle.

8. System zum Verarbeiten von Konfigurationsinformationen, umfassend: eine Multi-Cell/Multi-Media Cooperation Entity, MCE, (10);
wobei die MCE umfasst:
eine Bestimmungskomponente (100), die dazu konfiguriert ist, Almost Blank Subframe-, ABS, Konfigurationsinformationen zu bestimmen, die jeder Basisstation aus einer oder mehreren Basisstationen entsprechen, wobei die eine oder mehreren Basisstationen alle von der MCE gesteuert werden, und die eine oder mehreren Basisstationen einen oder mehrere Inter-Cell Interference Coordination-, ICIC, Bereiche darstellen; und
eine Sendekomponente (102), die dazu konfiguriert ist, die jedem ICIC-Bereich aus dem einen oder mehreren ICIC-Bereichen entsprechenden ABS-Konfigurationsinformationen an jede Basisstation aus einer oder mehreren Basisstationen im ICIC-Bereich zu senden;
**dadurch gekennzeichnet, dass** die Bestimmungskomponente (100) dazu konfiguriert ist, für jeden ICIC-Bereich in dem einen oder mehreren ICIC-Bereichen Multimedia Broadcast Multicast Service Single Frequency Network-, MBSFN, Bereichs-Identifikator-, ID, Informationen zuzuweisen, die dem ICIC-Bereich entsprechen, wobei nach Lesen der MBSFN-Bereichs-ID-Informationen eine oder mehrere Basisstationen im ICIC-Bereich bestimmen, dass ein Bereich den MBSFN-Bereichs-ID-Informationen entsprechend ein ICIC-Bereich ist; und die MBSFN-Bereichs-ID-Informationen verwendet werden, um anzugeben, dass ein MBSFN-Subframe, der von einer oder mehreren Basisstationen im ICIC-Bereich von der MCE bezogen wurde, den MBSFN-Bereichs-ID-Informationen entsprechend ein ABS-Subframe für ICIC ist; oder die Bestimmungskomponente (100) dazu konfiguriert ist, über Konfigurieren einer Multimedia Broadcast Multicast Service-, MBMS, Planungsinformationen-Nachricht für jede Basisstation aus einer oder mehreren Basisstationen in jedem ICIC-Bereich aus dem einen oder mehreren ICIC-Bereichen, zu jedem ICIC-Bereich aus dem einen oder mehreren ICIC-Bereichen die dem ICIC-Bereich entsprechenden ABS-Konfigurationsinformationen zuzuweisen, wobei die MBMS-Planungsinformationen-Nachricht dem ICIC-Bereich entsprechende MBSFN-Bereichs-ID-Informationen und MBSFN-Subframe-Konfigurationsinformationen übermittelt, und ein Informationselement, das Physical Multicast Channel-, PMCH, Konfigurationsinformationen entspricht, so konfiguriert ist, dass es leer ist; und nach Lesen der MBSFN-Bereichs-ID-Informationen die eine oder mehreren Basisstationen im ICIC-Bereich bestimmen, dass ein Bereich den MBSFN-Bereichs-ID-Informationen entsprechend ein ICIC-Bereich ist und gemäß den MBSFN-Subframe-Konfigurationsinformationen bestimmen, dass ein MBSFN-Subframe, der von der MCE bezogen wurde, ein ABS-Subframe für die ICIC ist; oder die Bestimmungskomponente (100) dazu konfiguriert ist, über eine Nachricht und einen Vorgang einer M2-Schnittstelle Konfigurationsinformationen von einem oder mehreren MBSFN-Bereichen für die eine oder mehreren Basisstationen unter der Steuerung der MCE zu konfigurieren, wobei die Konfigurationsinformationen von mindestens einem MBSFN-Bereichen aus dem einen oder mehreren MBSFN-Bereichen MBSFN-Bereichs-ID-Informationen, die einem ICIC-Bereich entsprechen, zu welchem die Basisstation gehört, und entsprechende MBSFN-Subframe-Konfigurationsinformationen übermitteln, während ein MBMS-Gateway nur Daten sendet, um einen MBMS-Dienst an eine oder mehrere Basisstationen unter der Steuerung der MCE via eine M1-Schnittstelle zu übertragen, und eine oder mehrere Basisstationen in jedem MBSFN-Bereich aus dem einen oder mehreren MBSFN-Bereichen gemäß MBMS-Dateninhalt eines Bereichs den MBSFN-Bereichs-ID-Informationen entsprechend, die so konfiguriert wurden, dass sie leer sind, bestimmen, dass der Bereich den MBSFN-Bereichs-ID-Informationen entsprechend ein ICIC-Bereich ist, und bestimmen, dass ein MBMS-Subframe des ICIC-Bereichs ein ABS-Subframe für ICIC ist.

9. System nach Anspruch 8, wobei die mehreren Basisstationen in jedem ICIC-Bereich aus dem einen oder mehreren ICIC-Bereichen umfassen: eine Makro-Basisstation und eine oder mehrere Pico-Basisstationen, oder eine Basisstation einer Aggressorzelle und eine oder mehrere Basisstationen von einer oder mehreren Opferzellen.

10. System nach Anspruch 9, wobei das System weiter umfasst: eine Makro-Basisstation und eine oder mehrere Mikro-Basisstationen, oder eine Basisstation einer Aggressorzelle oder eine oder mehrere Basisstationen einer Opferzelle;
wobei die Makro-Basisstation oder eine Basisstation der Aggressorzelle (20) umfasst:
eine Einstellkomponente (200), die dazu konfiguriert ist, ein Datenfeld auf dem MBSFN-Subframe, der von der MCE bezogen wurde, so zu konfigurieren, dass es sich in einem Leerlaufzustand befindet; und
wobei die Mikro-Basisstation oder die Basisstation der Opferzelle (30) umfasst:
eine Sendekomponente (300), die dazu konfiguriert ist, Daten in dem Datenfeld auf dem MBSFN-Subframe, der von der MCE bezogen wurde, zu senden.

11. System nach Anspruch 10, wobei die Bestimmungskomponente (100) umfasst:
ein Bezugselement (1000), das dazu konfiguriert ist, ABS-Zustandsinformationen, die jeder Basisstation aus der einen oder mehreren Basisstationen entsprechen, zu beziehen, wobei die jeder Basisstation entsprechenden ABS-Zustandsinformationen ABS-Konfigurationsinformationen, die aktuell von der Basisstation verwendet werden, und/oder ABS-Konfigurationsinformationen übermitteln, die bezogen werden sollen; und
ein Berechnungselement (1002), das dazu konfiguriert ist, die jeder Basisstation aus der einen oder mehreren Basisstationen entsprechenden ABS-Konfigurationsinformationen gemäß den bezogenen ABS-Zustandsinformationen, die jeder Basisstation aus der einen oder mehreren Basisstationen entsprechen, zu berechnen.

12. System nach Anspruch 11, wobei jede Basisstation aus der einen oder mehreren Basisstationen unter der Steuerung der MCE (30) umfasst:
eine Berichtskomponente (302), die dazu konfiguriert ist, die der Basisstation entsprechenden ABS-Zustandsinformationen an die MCE zu berichten.

13. System nach Anspruch 12, wobei die Berichtskomponente (302) dazu konfiguriert ist, die der Basisstation entsprechenden ABS-Zustandsinformationen über eine der folgenden Weisen an die MCE zu berichten: eine Betriebs- und Wartungsstation, eine Netzwerkmanagementsystem-Konfigurationsschnittstelle, und eine Nachricht oder einen Vorgang der M2-Schnittstelle.

14. System nach einem der Ansprüche 8 bis 13, wobei die Sendekomponente (102) dazu konfiguriert ist, die der Basisstation entsprechenden ABS-Konfigurationsinformationen über eine der folgenden Weisen an jede Basisstation aus der einen oder mehreren Basisstationen zu senden: eine Betriebs- und Wartungsstation, eine Netzwerkmanagementsystem-Konfigurationsschnittstelle, und eine Nachricht oder einen Vorgang der M2-Schnittstelle.

## Revendications

1. Procédé pour le traitement d'informations de configuration, comprenant :
la détermination, par une entité de coopération multicellulaire/multimédia, MCE, d'informations de configuration de sous-trame presque vide, ABS, correspondant à chaque station de base d'une ou de multiples stations de base, dans lequel l'une ou les multiples stations de base sont toutes commandées par la MCE, et l'une ou les multiples stations de base constituent une ou plusieurs zones de coordination d'interférence intercellulaire, ICIC, (S402) ; et
l'envoi, par la MCE, des informations de configuration ABS correspondant à chaque zone ICIC de l'une ou plusieurs zones ICIC, à chaque station de base d'une ou de multiples stations de base dans la zone ICIC (S404) ;
**caractérisé en ce que** la détermination, par la MCE, des informations de configuration ABS correspondant à chaque station de base de l'une ou des multiples stations de base comprend : l'allocation, par la MCE pour chaque zone ICIC dans l'une ou plusieurs zones ICIC, d'informations d'identificateur, ID, de zone de réseau à fréquence unique de services de diffusion et multidiffusion multimédia, MBSFN, correspondant à la zone ICIC, dans lequel, après la lecture des informations d'ID de zone MBSFN, une ou de multiples stations de base dans la zone ICIC déterminent qu'une zone correspondant aux informations d'ID de zone MBSFN est une zone ICIC ; et les informations d'ID de zone MBSFN sont utilisées pour indiquer qu'une sous-trame MBSFN acquise à partir de la MCE par l'une ou les multiples stations de base dans la zone ICIC correspondant aux informations d'ID de zone MBSFN est une sous-trame ABS pour ICIC ; ou l'allocation, par la MCE par le biais de la configuration d'un message d'informations de planification de services de diffusion et multidiffusion multimédia, MBMS, pour chaque station de base de l'une ou des multiples stations de base dans chaque zone ICIC de l'une ou plusieurs zones ICIC, à chaque zone ICIC de l'une ou plusieurs zones ICIC, des informations de configuration ABS correspondant à la zone ICIC, dans lequel le message d'informations de planification MBMS porte des informations d'ID de zone MBSFN et des informations de configuration de sous-trame MBSFN correspondant à la zone ICIC, et un élément d'information correspondant à des informations de configuration de canal physique de multidiffusion, PMCH, est configuré pour être vide ; et, après la lecture des informations d'ID de zone MBSFN, l'une ou les multiples stations de base dans la zone ICIC déterminent qu'une zone correspondant aux informations d'ID de zone MBSFN est une zone ICIC et déterminent, en fonction des informations de configuration de sous-trame MBSFN, qu'une sous-trame MBSFN acquise à partir de la MCE est une sous-trame ABS pour ICIC ; ou la configuration, par la MCE par le biais d'un message et d'une procédure d'une interface M2, d'informations de configuration d'une ou plusieurs zones MBSFN pour l'une ou les multiples stations de base sous la commande de la MCE, dans lequel les informations de configuration d'au moins une zone MBSFN de l'une ou plusieurs zones MBSFN portent des informations d'ID de zone MBSFN correspondant à une zone ICIC à laquelle la station de base appartient et des informations de configuration de sous-trame MBSFN correspondantes, entre-temps, une passerelle MBMS envoie seulement des données pour supporter un service MBMS à l'une ou les multiples stations de base sous la commande de la MCE par le biais d'une interface M1 ; et une ou de multiples stations de base dans chaque zone MBSFN de l'une ou plusieurs zones MBSFN déterminent, en fonction d'un contenu de données MBMS d'une zone correspondant aux informations d'ID de zone MBSFN ayant été configurée pour être vide, que la zone correspondant aux informations d'ID de zone MBSFN est une zone ICIC et détermine qu'une sous-trame MBSFN de la zone ICIC est une sous-trame ABS pour ICIC.

2. Procédé selon la revendication 1, dans lequel les multiples stations de base dans chaque zone ICIC de l'une ou plusieurs zones ICIC comprennent : une macro station de base et une ou plusieurs pico stations de base, ou une station de base d'une cellule agresseur et une ou de multiples stations de base d'une ou plusieurs cellules victimes.

3. Procédé selon la revendication 1, dans lequel, après l'envoi, par la MCE, des informations de configuration ABS correspondant à chaque zone ICIC à chaque station de base de l'une ou des multiples stations de base dans chaque zone ICIC de l'une ou plusieurs zones ICIC, le procédé comprend en outre :
la configuration par une macro station de base ou une station de base d'une cellule agresseur d'un champ de données sur la sous-trame MBSFN acquise à partir de la MCE pour qu'il soit dans un étant inactif ; et
l'envoi par une pico station de base ou une station de base d'une cellule victime de données dans le champ de données de la sous-trame MBSFN acquise à partir de la MCE.

4. Procédé selon la revendication 1, dans lequel la détermination, par la MCE, des informations de configuration ABS correspondant à chaque station de base de l'une ou des multiples stations de base comprend :
l'acquisition, par la MCE, d'informations d'état ABS correspondant à chaque station de base de l'une ou des multiples stations de base, dans lequel les informations d'état ABS correspondant à chaque station de base portent des informations de configuration ABS actuellement utilisées par la station de base et/ou des informations de configuration ABS à acquérir ; et
le calcul, par la MCE, des informations de configuration ABS correspondant à chaque station de base de l'une ou des multiples stations de base en fonction des informations d'état ABS acquises correspondant à chaque station de base de l'une ou des multiples stations de base.

5. Procédé selon la revendication 4, dans lequel, avant l'acquisition, par la MCE, d'informations d'état ABS correspondant à chaque station de base de l'une ou des multiples stations de base, le procédé comprend en outre :
la notification, par chaque station de base de l'une ou des multiples stations de base, des informations d'état ABS correspondant à la station de base à la MCE.

6. Procédé selon la revendication 5, dans lequel chaque station de base de l'une ou des multiples stations de base notifie les informations d'état ABS correspondant à la station de base à la MCE de l'une des manières suivantes :
une station d'exploitation et de maintenance, une interface de configuration de système de gestion de réseau et un message ou une procédure de l'interface M2.

7. Procédé selon l'une quelconque des revendications 1 à 6, dans lequel la MCE envoie, à chaque station de base de l'une ou des multiples stations de base, les informations de configuration ABS correspondant à la station de base de l'une des manières suivantes :
une station d'exploitation et de maintenance, une interface de configuration de système de gestion de réseau et un message ou une procédure de l'interface M2.

8. Système pour le traitement d'informations de configuration, comprenant :
une entité de coopération multicellulaire/multimédia, MCE, (10) ;
la MCE comprenant :
un composant de détermination (100) configuré pour déterminer des informations de configuration de sous-trame presque vide, ABS, correspondant à chaque station de base d'une ou de multiples stations de base, dans lequel l'une ou les multiples stations de base sont toutes commandées par la MCE, et l'une ou les multiples stations de base constituent une ou plusieurs zones de coordination d'interférence intercellulaire, ICIC ; et
un composant d'envoi (102) configuré pour envoyer les informations de configuration ABS correspondant à chaque zone ICIC de l'une ou plusieurs zones ICIC, à chaque station de base d'une ou de multiples stations de base dans la zone ICIC ;
**caractérisé en ce que** le composant de détermination (100) est configuré pour allouer, pour chaque zone ICIC dans l'une ou plusieurs zones ICIC, des informations d'identificateur, ID, de zone de réseau à fréquence unique de services de diffusion et multidiffusion multimédia, MBSFN, correspondant à la zone ICIC, dans lequel, après la lecture des informations d'ID de zone MBSFN, une ou de multiples stations de base dans la zone ICIC déterminent qu'une zone correspondant aux informations d'ID de zone MBSFN est une zone ICIC ; et les informations d'ID de zone MBSFN sont utilisées pour indiquer qu'une sous-trame MBSFN acquise à partir de la MCE par l'une ou les multiples stations de base dans la zone ICIC correspondant aux informations d'ID de zone MBSFN est une sous-trame ABS pour ICIC ; ou le composant de détermination (100) est configuré pour allouer, par le biais de la configuration d'un message d'informations de planification de services de diffusion et multidiffusion multimédia, MBMS, pour chaque station de base de l'une ou des multiples stations de base dans chaque zone ICIC de l'une ou plusieurs zones ICIC, à chaque zone ICIC de l'une ou plusieurs zones ICIC, des informations de configuration ABS correspondant à la zone ICIC, dans lequel le message d'informations de planification MBMS porte des informations d'ID de zone MBSFN et des informations de configuration de sous-trame MBSFN correspondant à la zone ICIC, et un élément d'information correspondant à des informations de configuration de canal physique de multidiffusion, PMCH, est configuré pour être vide ; et, après la lecture des informations d'ID de zone MBSFN, l'une ou les multiples stations de base dans la zone ICIC déterminent qu'une zone correspondant aux informations d'ID de zone MBSFN est une zone ICIC et déterminent, en fonction des informations de configuration de sous-trame MBSFN, qu'une sous-trame MBSFN acquise à partir de la MCE est une sous-trame ABS pour l'ICIC ; ou le composant de détermination (100) est configuré pour configurer, par le biais d'un message et d'une procédure d'une interface M2, des informations de configuration d'une ou plusieurs zones MBSFN pour l'une ou les multiples stations de base sous le contrôle de la MCE, dans lequel les informations de configuration d'au moins une zone MBSFN de l'une ou plusieurs zones MBSFN portent des informations d'ID de zone MBSFN correspondant à une zone ICIC à laquelle la station de base appartient et des informations de configuration de sous-trame MBSFN correspondantes, entre-temps, une passerelle MBMS envoie seulement des données pour supporter un service MBMS à l'une ou les multiples stations de base sous la commande de la MCE par le biais d'une interface M1, et une ou de multiples stations de base dans chaque zone MBSFN de l'une ou plusieurs zones MBSFN déterminent, en fonction d'un contenu de données MBMS d'une zone correspondant aux informations d'ID de zone MBSFN ayant été configurée pour être vide, que la zone correspondant aux informations d'ID de zone MBSFN est une zone ICIC et détermine qu'une sous-trame MBMS de la zone ICIC est une sous-trame ABS pour ICIC.

9. Système selon la revendication 8, dans lequel les multiples stations de base dans chaque zone ICIC de l'une ou plusieurs zones ICIC comprennent : une macro station de base et une ou plusieurs pico stations de base, ou une station de base d'une cellule agresseur ou une ou de multiples stations de base d'une ou plusieurs cellules victimes.

10. Système selon la revendication 9, dans lequel le système comprend en outre : une macro station de base et une ou plusieurs micro stations de base, ou une station de base d'une cellule agresseur ou une ou de multiples stations de base d'une cellule victime ;
la macro station de base ou une station de base de la cellule agresseur (20) comprenant :
un composant de réglage (200) configuré pour configurer un champ de données sur la sous-trame MBSFN acquise à partir de la MCE pour qu'il soit dans un étant inactif ; et
la micro station de base ou la station de base de la cellule victime (30) comprenant :
un composant d'envoi (300) configuré pour envoyer des données dans le champ de données de la sous-trame MBSFN acquise à partir de la MCE.

11. Système selon la revendication 10, dans lequel le composant de détermination (100) comprend :
un élément d'acquisition (1000) configuré pour acquérir des informations d'état ABS correspondant à chaque station de base de l'une ou des multiples stations de base, dans lequel les informations d'état ABS correspondant à chaque station de base portent des informations de configuration ABS actuellement utilisées par la station de base et/ou des informations de configuration ABS à acquérir ; et
un élément de calcul (1002) configuré pour calculer les informations de configuration ABS correspondant à chaque station de base de l'une ou des multiples stations de base en fonction des informations d'état ABS acquises correspondant à chaque station de base de l'une ou des multiples stations de base.

12. Système selon la revendication 11, chaque station de base de l'une ou des multiples stations de base sous la commande de la MCE (30) comprend :
un composant de notification (302) configuré pour notifier les informations d'état ABS correspondant à la station de base à la MCE.

13. Système selon la revendication 12, dans lequel le composant de notification (302) est configuré pour notifier les informations d'état ABS correspondant à la station de base à la MCE de l'une des manières suivantes : une station d'exploitation et de maintenance, une interface de configuration de système de gestion de réseau et un message ou une procédure de l'interface M2.

14. Système selon l'une quelconque des revendications 8 à 13, dans lequel le composant d'envoi (102) est configuré pour envoyer, à chaque station de base de l'une ou des multiples stations de base, les informations de configuration ABS correspondant à la station de base de l'une des manières suivantes : une station d'exploitation et de maintenance, une interface de configuration de système de gestion de réseau et un message ou une procédure de l'interface M2.
